(19) Europäisches Patentamt
European Patent Office
Office européen des brevets

(11) **EP 4 640 450 A1**

(12) **EUROPEAN PATENT APPLICATION**
published in accordance with Art. 153(4) EPC

(43) Date of publication:
**29.10.2025  Bulletin 2025/44**

(21) Application number: **23905396.0**

(22) Date of filing: **12.10.2023**

(51) International Patent Classification (IPC):
**B60H 1/00** (2006.01)

(52) Cooperative Patent Classification (CPC):
**B60H 1/00**

(86) International application number:
**PCT/CN2023/124296**

(87) International publication number:
**WO 2024/131223 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022  CN 202211657673**

(71) Applicant: **Nio Technology (Anhui) Co., Ltd
Hefei City, Anhui 230601 (CN)**

(72) Inventors:
• **CHEN, Jinfeng
  Shanghai 201804 (CN)**
• **JIANG, Limin
  Shanghai 201804 (CN)**

(74) Representative: **Vossius & Partner
Patentanwälte Rechtsanwälte mbB
Siebertstrasse 3
81675 München (DE)**

(54) **AUTOMOBILE AIR CONDITIONER MULTI-AREA AIR VOLUME CONTROL METHOD AND VEHICLE**

(57)     Provided are a multi-zone airflow control method for a vehicle air conditioner, and a vehicle. In the control method, on the basis of separate components of an air-conditioning system, a pressure-flow coupling model is constructed, an airflow and a pressure in each zoned air channel are calculated on the basis of a balance relationship between pressure and flow according to the model, where the airflow is compared with a target airflow to obtain an optimal duty ratio of a blower (4) and an optimal opening position of a damper.

FIG. 2

# Description

## REFERENCE TO PRIORITY APPLICATION

The present application claims the right of priority of Chinese patent application with application number "202211657673.5" filed on December 22, 2022, the content of which is incorporated herein by reference in its entirety.

## TECHNICAL FIELD

The invention relates to the field of vehicle air conditioner control, and particularly provides a multi-zone airflow control method for a vehicle air conditioner, and a vehicle.

## BACKGROUND ART

With the rapid development of modern transportation, vehicles have currently become the first choice for people's travel. As an important part of vehicles, vehicle air conditioners have improved the comfort of vehicle occupants. With the development of technologies, the demand of people for the air conditioners have evolved beyond merely controlling temperature to more refined and economical solutions. Therefore, research on air conditioning control in vehicles has become a trend of modern development of the vehicle air conditioners.

Currently, the zoning in automotive air conditioning mainly consists of temperature zoning, mode zoning, and airflow zoning, where the closed-loop control of the temperature zoning and the mode zoning can be achieved respectively by means of temperature sensor feedback and driving motor position feedback maturely applied in an air conditioning unit, and dissimilar to the above two zoning modes, there is no relevant feedback signal for the airflow zoning. A solution is that airflow data under the condition of various combinations of modes and settings are obtained only by relying on experiments and then filled in a table for subsequent use by software. Such a table lookup method needs a large amount of experimental data and calibration workload and is difficult to implement with an increase in the modes and airflow settings. Taking the combinations of dual-zone modes + dual-zone airflow settings as an example, tens of thousands of mode and airflow combinations can be provided. On this basis, adding another zone for either mode or airflow can increase the workload by dozens to hundreds of times, and generally a processing method in which interpolation follows interval testing is adopted in order to decrease the workload, eventually causing the problems of low accuracy of airflow control and large interferences of the airflows between different zones. Also, due to the limited data on which the table lookup method relies, the settings where the data are time-discrete cannot continuously and stably control the airflows. In addition, with this table lookup method, if any changes are made to the air conditioning system later on, all relevant airflow measurements must be redone, resulting in poor reusability of the control method.

Another solution is that an additional air velocity or differential pressure sensor is provided in each airflow zone for single-zone airflow measurement such that airflow control can be performed according to feedback values. On the one hand, the feedback-based airflow control method has a long adjustment time before a target airflow is reached, and is prone to causing air turbulence in each zone, and each additional airflow zone requires a new set of air velocity or airflow sensors, which simultaneously increases system complexity and costs. Moreover, there are currently no mature applications of airflow or differential pressure sensors for vehicles.

Accordingly, there is a need for a novel control method for a vehicle air conditioner in the art to solve the above-mentioned problems.

## SUMMARY

The invention aims to solve the above-mentioned technical problems, that is, to solve the problems of low control accuracy and high costs for multi-zone airflow control of a vehicle air conditioner in the prior art. For this purpose, the invention provides a multi-zone airflow control method for a vehicle air conditioner. The air conditioner includes a blower, an air channel and dampers, where the blower is configured to deliver an airflow to the air channel, the air channel has a plurality of zoned air channels, and the dampers are arranged at outlet ends of the zoned air channels and control the airflows at the outlet ends of the zoned air channels by adjusting opening degrees.

The control method includes:

S 100: acquiring a target airflow of each zoned air channel according to a current mode and an airflow setting of the air conditioner, setting an initial duty ratio of the blower, and acquiring an air pressure at the intersection of the zoned air channels;

S200: acquiring a zoned air channel pressure of each zoned air channel by means of a pressure-flow coupling model from the blower to each zoned air channel and a mathematical equation expression according to the air pressure at the intersection of the zoned air channels and the target airflow; and

S300: comparing the maximum airflow of each zoned air channel under the zoned air channel pressure with the target airflow thereof one by one to determine whether the duty ratio of the blower meets efficiency requirements; if the efficiency requirements are not met, adjusting the duty ratio of the blower, reacquiring the air pressure at the intersection of the zoned air channels, and then executing step S200; if the efficiency requirements are met, adjusting an opening position of the damper such that the airflow at the outlet end of each zoned air channel is equal to the target airflow.

In the above-described specific implementation of the control method, the mathematical equation expression in step S200 is calculated on the basis of a balance relationship between a pressure drop and the airflow.

In the above-described specific implementation of the control method, the balance relationship between the pressure drop and the airflow includes a balance relationship of the pressure drop of each zoned air channel, and/or a balance relationship between the airflow of each zoned air channel and the target airflow.

In the above-described specific implementation of the control method, the pressure drop of each zoned air channel is acquired according to a functional relationship between the pressure drop and the airflow of the zoned air channel, the mathematical equation expression is calculated according to the balance relationship of the pressure drop of each zoned air channel, and/or the mathematical equation expression is calculated on the basis of the balance of an effective airflow, a leaked airflow and the target airflow of each zoned air channel.

In the above-described specific implementation of the control method, step S300 specifically includes: determining whether there is at least one zoned air channel having the maximum airflow less than the target airflow under the zoned air channel pressure, if yes, it is indicated that the efficiency requirements are not met, rising the duty ratio of the blower, and returning to step S100 to repeat the process until the maximum airflows of all the zoned air channels are not less than the target airflows under the zoned air channel pressures; and if not, determining whether there is at least one zoned air channel having the maximum airflow equal to the target airflow under the zoned air channel pressure, if not, it is indicated that the efficiency requirements are not met, lowering the duty ratio of the blower, and returning to step S100 to repeat the process until the maximum airflow of at least one zoned air channel is equal to the target airflow under the zoned air channel pressure; and if yes, it is indicated that the efficiency requirements are met, adjusting the opening position of the damper such that the airflow at the outlet end of the zoned air channel is equal to the target airflow.

In the above-described specific implementation of the control method, the maximum airflow of the zoned air channel under the zoned air channel pressure is the airflow when the damper is fully opened.

In the above-described specific implementation of the control method, the air conditioner further includes an evaporator, a condenser and a resistance heater; and the pressure-flow coupling model is a coupling model constructed in a case where air flows to each zoned air channel through the blower, the evaporator, the condenser and the resistance heater.

In the above-described specific implementation of the control method, step S100 "acquiring an air pressure at the intersection of the zoned air channels" further includes:
acquiring an air blowing pressure according to the initial duty ratio of the blower, acquiring respective pressure drops of the evaporator, the condenser and the resistance heater, and acquiring the air pressure at the intersection of the zoned air channels according to the air blowing pressure, the pressure drop of the evaporator and/or the pressure drop of the condenser and/or the pressure drop of the resistance heater.

In the above-described specific implementation of the control method, the air blowing pressure and the respective pressure drops of the evaporator, the condenser and the resistance heater are obtained by means of a table lookup method or a functional relationship.

The invention also provides a vehicle, including a controller that is configured to perform a multi-zone airflow control method for an air conditioner described in the above solution.

By adopting the above technical solution, and on the basis of separate components of an air conditioning system, the invention constructs the pressure-flow coupling model, calculates the airflow and the pressure of each zoned air channel on the basis of the balance relationship between the pressure and a flow according to the model, and compares the airflow with the target airflow to obtain an optimal duty ratio of the blower and an optimal opening position of the damper, so that rapid and accurate control of the multi-zone airflows of the vehicle air conditioner is achieved. The invention can achieve accurate, continuous and stable control of the multi-mode multi-zone airflows only by relying on the construction and solution of the mathematical physical model without additional sensors, and thus reduces control costs; compared with the table lookup method, it is possible to achieve the accurate, continuous and stable control by means of a multi-zone mode and airflow combination, without airflow tests relying on a large number of combinations of modes and airflow settings; compared with a method relying on true sensor feedback, the control method of the invention can output all control targets quickly by means of virtual iteration on the duty ratio of the blower meeting the target airflow and the position of the damper, control the blower and the damper to reach the target position required by the airflow in each zone in one step, without the problems of turbulence caused by adjustment and long convergence time; the control method has high reusability, and when components and the system are replaced, only the models and parameters of corresponding change points need to be updated without affecting a logical architecture of the whole control method; the extensibility of the airflow control method is improved, and when the vehicle air conditioner is extended, the multi-zone airflow control method based on the mathematical physical model provided in the invention can perform solution only by adding the corresponding component model to a pressure-flow network model; and by means of the control method of the invention, the pressure-flow distributions can be calculated throughout an air conditioning unit, and the control method can support subsequent structure and component optimization of the air conditioning unit.

## BRIEF DESCRIPTION OF THE DRAWINGS

Preferred implementations of the invention will be described below with reference to the accompanying drawings, in which:

FIG. 1 is a schematic diagram of a vehicle air conditioning unit according to an embodiment of the invention;
FIG. 2 is a schematic diagram of main control steps of the invention;
FIG. 3 is a schematic diagram of a pressure-flow coupling model of an air conditioning system of the invention; and
FIG. 4 is a schematic diagram of a pressure-flow coupling model of a zoned air channel portion of the invention.

List of reference numerals: 1. internal circulation damper; 2. external circulation damper; 3. filter element; 4. blower; 5. evaporator; 6. internal condenser; 7. positive temperature coefficient resistance heater; 8. defrosting damper; 9. front face blowing damper; 10. lateral partition plate; 11. front foot blowing damper; 12. front bypass damper; 13. vertical partition damper; 14. rear bypass damper; 15. rear foot blowing damper; 16. rear face blowing damper.

## DETAILED DESCRIPTION OF EMBODIMENTS

Preferred implementations of the invention will be described below in conjunction with airflow control of a four-zone vehicle air conditioner and with reference to the accompanying drawings. It should be understood by those skilled in the art that these implementations are only for explaining the technical principle of the invention, and are not intended to limit the scope of protection of the invention. Those skilled in the art can adjust these implementations according to requirements to adapt to specific application scenarios. For example, although this description is provided in conjunction with the airflow control of the four-zone vehicle air conditioner in the specification, this is not restrictive. Those skilled in the art can apply the invention to airflow control of any other multi-zone vehicle air conditioners as long as the vehicle air conditioner needs to control the airflow of each zone to reach an optimal operating state.

It should be noted that, in the description of the invention, the terms that indicate the direction or positional relationships, such as "upper", "lower", "left", "right", "inner", and "outer", are on the basis of the direction or positional relationships shown in the accompanying drawings, which is merely for ease of description instead of indicating or implying that a related device or element must have a particular orientation and be constructed and operated in a particular orientation, and therefore should not be construed as limiting the invention. Moreover, the ordinal numbers such as "first" and "second" are merely used for the illustrative purpose, and should not be construed as indicating or implying relative importance.

In addition, it should also be noted that, in the description of the invention, the terms "mount" and "connect" should be interpreted in a broad sense unless explicitly defined and limited otherwise. For example, the terms may mean a fixed connection, a detachable connection or an integral connection; may be a mechanical connection or an electrical connection; may be a direct connection, or an indirect connection by means of an intermediate medium. For those skilled in the art, the specific meanings of the foregoing terms in the invention can be interpreted according to a specific situation.

Furthermore, in order to show a key technical solution of the invention more clearly, the description of known structures of the vehicle air conditioner is omitted below, but this omission is merely for ease of description and does not mean that the vehicle air conditioner may not be provided with these structures.

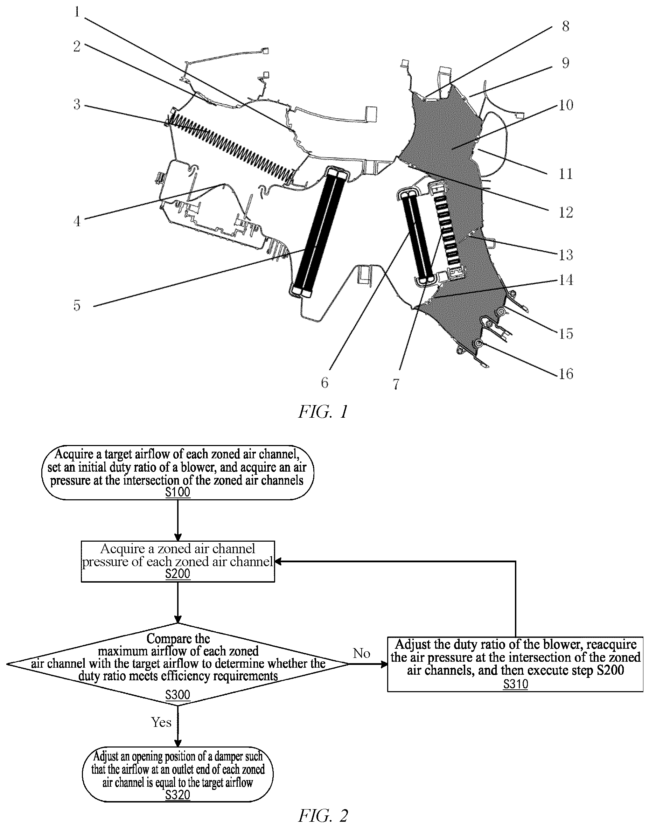

As shown in FIG. 1, which is a schematic diagram of a vehicle air conditioning unit, this embodiment will be described in conjunction with zoned air channel control of a four-zone vehicle air conditioner shown in FIG. 1. It should be noted that this embodiment is not intended to limit the scope of protection of the invention, and those skilled in the art may apply a control method of the invention to the airflow control of any other multi-zone vehicle air conditioners without departing from the technical concept of the invention.

As shown in FIG. 1, the vehicle air conditioning unit structure of the embodiment integrates components into a whole by means of a unit body, an air channel is designed in the unit body, and dampers having controllable opening degrees are mounted on the unit body, where an internal circulation damper 1 and an external circulation damper 2 are mounted on an air inlet side to control airflow proportions of an internal circulation and an external circulation respectively, a filter element 3 for filtering circulating air is mounted on an air outlet side that is common to the internal circulation damper 1 and the external circulation damper 2, and a blower 4 is mounted in the unit body to pressurize a filtered air; the filtered air is cooled and dehumidified by an evaporator 5, the cooled air then passes through an internal condenser 6 and is heated in a heat pump mode, and later the air is heated by a positive temperature coefficient resistance heater 7 by means of electric energy. In this embodiment, four zones are formed by means of partitioning with a lateral partition plate 10 and a vertical partition plate to deliver airflows, dampers in communication with the four zones are a defrosting damper 8, a front face blowing damper, a front foot blowing damper 11, a front bypass damper 12, a rear bypass damper 14, a rear foot blowing damper 15 and a rear face blowing damper 16 that can control the airflows by adjusting their opening degrees. This embodiment is described in conjunction with the control method of the invention by taking the internal circulation of the above-mentioned vehicle air conditioning system as an example.

Referring to FIG. 2, which is a schematic diagram of main steps of the invention, the control method of the invention includes the following steps:

> S 100: acquiring a target airflow of each zoned air channel according to a current mode and an airflow setting of an air conditioner, setting an initial duty ratio of the blower, and acquiring an air pressure at the intersection of the zoned air channels;
> S200: acquiring a zoned air channel pressure of each zoned air channel by means of a pressure-flow coupling model from the blower to each zoned air channel and a mathematical equation expression according to the air pressure at the intersection of the zoned air channels and the target airflow;
> S300: comparing the maximum airflow of each zoned air channel under the zoned air channel pressure with the target airflow thereof one by one to determine whether the duty ratio of the blower meets efficiency requirements;
> S310: if the efficiency requirements are not met, adjusting the duty ratio of the blower, reacquiring the air pressure at the intersection of the zoned air channels, and then executing step S200;
> S320: if the efficiency requirements are met, adjusting an opening position of the damper such that the airflow at an outlet end of each zoned air channel is equal to the target airflow.

In this embodiment, first, the target airflow $Q_{i.\,target}$ of each zoned air channel is acquired according to the mode and the airflow setting set by the vehicle air conditioning system in the above embodiment, and may be obtained specifically by means of a table lookup method. It should be noted that the parameters obtained herein by means of the table lookup method differ from those obtained by means of a table lookup method for zoned airflow control, a data capacity is much less than a data capacity of a combination for airflow control, and a subsequent table lookup method is the same as the method described here and will not be repeated again; then, according to the pressure-flow coupling model from the blower to the outlet end of each zoned air channel, an airflow value and a pressure value at each position in the vehicle air conditioning system can thus be calculated by means of the pressure-flow coupling model and a mathematical equation expression; first, this mathematical equation expression is solved on the premise of satisfying the target airflow, and therefore the demand for the airflow is necessarily met; next, it is required to judge the duty ratio of the blower on the basis of the initial duty ratio of the blower to determine whether the duty ratio is in an operating state of optimum efficiency, when the duty ratio of the blower is not an optimum duty ratio, continuous iterative optimization can be achieved, the optimum duty ratio of the blower can be iteratively calculated quickly and accurately, and by adjusting the opening degrees of the dampers, all zoned air channels output the target airflows while the duty ratio of the blower satisfies the optimal efficiency.

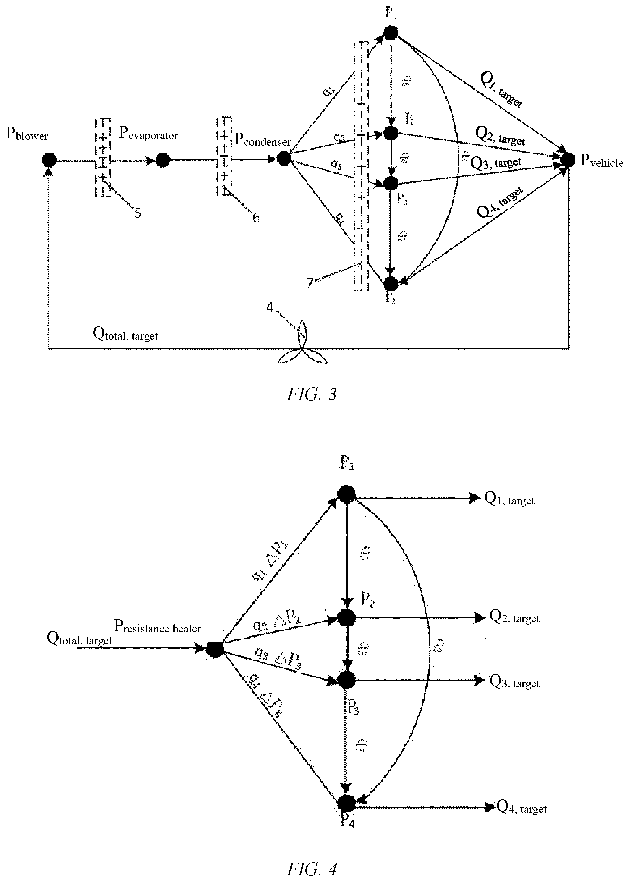

On the basis of the concept of the above embodiment and with reference to FIGS. 2 to 4, specifically, in this embodiment, an air channel of the positive temperature coefficient resistance heater is subsequently divided into four parts, the target airflows corresponding to the four zoned air channels are respectively represented by $Q_{1.\,target}$, $Q_{2\,target}$, $Q_{3\,target}$ and $Q_{4.\,target}$, a total target airflow $Q_{total.\,target}$ of the blower can be obtained by summing all the target airflows, and after the air inside a vehicle is pressurized by the blower, a pressure rises from $P_{vehicle}$ to $P_{blower}$, then drops to $P_{evaporator}$ by the evaporator and later drops to $P_{condenser}$ after the air passes through an internal condenser. After the air is blown out from the internal condenser and then passes through the positive temperature coefficient resistance heater, 4 zones are formed by means of partitioning, the airflows in the four zones are represented by $q_1$, $q_2$, $q_3$ and $q_4$, respectively. In addition, airflow leakage exists between the four zones at an outlet of the positive temperature coefficient resistance heater due to a gap existing between a lateral partition plate and a vertical partition plate and the positive temperature coefficient resistance heater, leaked airflows are respectively represented by $q_5$, $q_6$, $q_7$ and $q_8$, the airflows at the outlet ends of the four zoned air channels are the target airflows respectively, and a balance of the airflows is formed; when the air passes through the positive temperature coefficient resistance heater, pressure drops $\Delta P_1$, $\Delta P_2$, $\Delta P_3$ and $\Delta P_4$ occur, pressures corresponding to the target airflows at the outlet ends are respectively represented by $P_1$, $P_2$, $P_3$ and $P_4$, and finally $Q_{total.\,target}$ returns to the vehicle via the dampers. On the basis of the above flow and pressure relationship, a pressure-flow network model is constructed for the vehicle air conditioning system in this embodiment, specifically as shown in FIG. 3.

After the construction of the pressure-flow network model, it is required to solve the zoned air channel pressures corresponding to the target airflows of the air conditioning system. Specifically, the initial duty ratio is set for the blower, on the premise of knowing the total target airflow and the duty ratio on the blower side, an air blowing pressure $P_{blower}$ on an outlet side of the blower can be obtained by means of the table lookup table method or a functional relationship, the pressure drop of the evaporator and the pressure drop of the internal condenser can be calculated by means of looking up an experimental data table or function fitting, and a difference between a first attenuated air pressure and a second attenuated air pressure of the evaporator and the outlet side of the internal condenser can then be obtained, so that it is very easy to calculate a pressure $P_{resistance\,heater}$ at an inlet end of the positive temperature coefficient resistance heater, which is equivalent to $P_{condenser}$, and the pressure-flow models at the zoned air channels can be constructed according to a relationship between the above-mentioned pressures and the airflows and in combination with the overall pressure-flow network model. As shown in FIG. 4, separate solution cannot be performed due to the airflow leakage existing between the zoned air channels, by constructing a functional relationship expression $f_i(q_i)$, which is a non-linear expression, of the pressure drop and the airflow of each zoned air channel, the pressure-flow models of the zoned air channels can be simultaneous on the basis of the balance relationship between the pressure drops and the flows to obtain a system of quadratic equations in eight variables as follows:

$$\begin{cases} f_1(q_1) + f_5(q_5) - f_2(q_2) = 0 \\ f_2(q_2) + f_6(q_6) - f_3(q_3) = 0 \\ f_3(q_3) + f_7(q_7) - f_4(q_4) = 0 \\ f_1(q_1) + f_8(q_8) - f_4(q_4) = 0 \\ Q_1, target = q_1 - q_5 - q_8 \\ Q_2, target = q_2 + q_5 - q_6 \\ Q_3, target = q_3 + q_6 - q_7 \\ Q_4, target = q_4 + q_7 + q_8 \end{cases}$$

By means of a numerical iteration method, the above-mentioned non-linear system of equations are solved to obtain values for $q_1$, $q_2$, $q_3$, $q_4$, $q_5$, $q_6$, $q_7$ and $q_8$, the respective voltage drops of the four zones of the positive temperature coefficient resistance heater can be solved, and on the premise of knowing the pressure $P_{resistance\,heater}$ at the inlet end of the positive temperature coefficient resistance heater, the pressures $P_1$, $P_2$, $P_3$ and $P_4$ at outlets of the four zoned channels can also be obtained.

Further, it is required to judge the duty ratio of the blower on the basis of the solutions of the above embodiment, and the initial duty ratio of the blower is not necessarily an optimum duty ratio choice on the premise of satisfying the target airflows of the zoned air channels and needs to be further judged and verified. Specifically, on the premise of knowing the zoned air channel pressures of the four zoned air channels, the airflow of the corresponding zoned air channel can be obtained, by means of table lookup or the function fitting relationship, in a state where the damper is fully opened, and this airflow is the maximum possible airflow of this zone when the damper is fully opened. The airflow at the outlet end in this state is compared with the target airflow, a first-time judgment is performed to determine whether all the airflows at the outlet ends are less than the target airflows or not; if the airflows of all the zoned air channels are all less than the target airflows in the state where the dampers are fully opened, it is indicated that the duty ratio of the blower is excessively low, it is necessary to rise the duty ratio of the blower; if the airflows at the outlet ends of all the zones are all less than the target airflows in the state where the dampers are fully opened, a second-time judgment can be performed, and in this process, it is further determined whether the airflow at the outlet of at least one zoned air channel is equal to the target airflow; if this condition is not satisfied, it means that the airflows at the outlet ends of all the zoned air channels are all greater than the target airflows, it is indicated in this case that the duty ratio of the blower is excessively high and it is necessary to perform judgment after the duty ratio is lowered; if this condition is satisfied, it is indicated that the blower have reached the optimum duty ratio, that is, in an optimal efficiency state; at this time, it is required to adjust the opening position of the damper where the airflow is greater than the target airflow, and to reduce the opening degree thereof so as to meet the requirement of the airflow at the outlet end of the zoned air channel being the target airflow, the opening position of the corresponding damper and the duty ratio of the blower are both output at this time, the air conditioning system is controlled to operate according to such parameters, so that the target airflows can be output when the blower is at the optimum efficiency, thereby avoiding energy loss.

Further, the invention also provides a vehicle.

In this embodiment, the vehicle is provided with an element for controlling multi-zone airflows of the vehicle air conditioner, which may be a controller or a medium capable of carrying corresponding programs of the method for controlling the multi-zone airflows of the air conditioner in the above-described solution. If the element is the controller, the controller needs to be configured to perform the method for controlling the multi-zone airflows of the air conditioner in the above-described solution.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

**Claims**

1.   A multi-zone airflow control method for a vehicle air conditioner, the air conditioner comprising a blower, an air channel and dampers, the blower being configured to deliver an airflow to the air channel, the air channel having a plurality of zoned air channels, and the dampers being arranged at outlet ends of the zoned air channels and controlling the airflows at the outlet ends of the zoned air channels by adjusting opening degrees, the method comprising:

S 100: acquiring a target airflow of each zoned air channel according to a current mode and an airflow setting of the air conditioner, setting an initial duty ratio of the blower, and acquiring an air pressure at the intersection of the zoned air channels;

S200: acquiring a zoned air channel pressure of each zoned air channel by means of a pressure-flow coupling model from the blower to each zoned air channel and a mathematical equation expression according to the air pressure at the intersection of the zoned air channels and the target airflow; and

S300: comparing the maximum airflow of each zoned air channel under the zoned air channel pressure with the target airflow thereof one by one to determine whether the duty ratio of the blower meets efficiency requirements; if the efficiency requirements are not met, adjusting the duty ratio of the blower, reacquiring the air pressure at the intersection of the zoned air channels, and then executing step S200; if the efficiency requirements are met, adjusting an opening position of the damper such that the airflow at the outlet end of each zoned air channel is equal to the target airflow.

2. The multi-zone airflow control method for the vehicle air conditioner according to claim 1, wherein the mathematical equation expression in step S200 is calculated on the basis of a balance relationship between a pressure drop and the airflow.

3. The multi-zone airflow control method for the vehicle air conditioner according to claim 2, wherein the balance relationship between the pressure drop and the airflow includes a balance relationship of the pressure drop of each zoned air channel, and/or a balance relationship between the airflow of each zoned air channel and the target airflow.

4. The multi-zone airflow control method for the vehicle air conditioner according to claim 3, wherein the pressure drop of each zoned air channel is acquired according to a functional relationship between the pressure drop and the airflow of the zoned air channel, the mathematical equation expression is calculated according to the balance relationship of the pressure drop of each zoned air channel, and/or the mathematical equation expression is calculated on the basis of the balance of an effective airflow, a leaked airflow and the target airflow of each zoned air channel.

5. The multi-zone airflow control method for the vehicle air conditioner according to any one of claims 1 to 4, wherein step S300 specifically comprises:
determining whether there is at least one zoned air channel having the maximum airflow less than the target airflow under the zoned air channel pressure, if yes, it is indicated that the efficiency requirements are not met, rising the duty ratio of the blower, and returning to step S100 to repeat the process until the maximum airflows of all the zoned air channels are not less than the target airflows under the zoned air channel pressures; and if not, determining whether there is at least one zoned air channel having the maximum airflow equal to the target airflow under the zoned air channel pressure, if not, it is indicated that the efficiency requirements are not met, lowering the duty ratio of the blower, and returning to step S100 to repeat the process until the maximum airflow of at least one zoned air channel is equal to the target airflow under the zoned air channel pressure; and if yes, it is indicated that the efficiency requirements are met, adjusting the opening position of the damper such that the airflow at the outlet end of the zoned air channel is equal to the target airflow.

6. The multi-zone airflow control method for the vehicle air conditioner according to any one of claims 1 to 5, wherein the maximum airflow of the zoned air channel under the zoned air channel pressure is the airflow when the damper is fully opened.

7. The multi-zone airflow control method for the vehicle air conditioner according to any one of claims 1 to 6, wherein the air conditioner further comprises an evaporator, a condenser and a resistance heater; and
the pressure-flow coupling model is a coupling model constructed in a case where air flows to each zoned air channel through the blower, the evaporator, the condenser and the resistance heater.

8. The multi-zone airflow control method for the vehicle air conditioner according to claim 7, wherein step S100 "acquiring an air pressure at the intersection of the zoned air channels" further comprises:
acquiring an air blowing pressure according to the initial duty ratio of the blower, acquiring respective pressure drops of the evaporator, the condenser and the resistance heater, and acquiring the air pressure at the intersection of the zoned air channels according to the air blowing pressure, the pressure drop of the evaporator and/or the pressure drop of the condenser and/or the pressure drop of the resistance heater.

**9.** The multi-zone airflow control method for the vehicle air conditioner according to claim 8, wherein the air blowing pressure and the respective pressure drops of the evaporator, the condenser and the resistance heater are obtained by means of a table lookup method or a functional relationship.

**10.** A vehicle, comprising a controller that is configured to perform the multi-zone airflow control method for an air conditioner according to any one of claims 1 to 9.

EP 4 640 450 A1

FIG. 1

Acquire a target airflow of each zoned air channel, set an initial duty ratio of a blower, and acquire an air pressure at the intersection of the zoned air channels
S100

Acquire a zoned air channel pressure of each zoned air channel
S200

Compare the maximum airflow of each zoned air channel with the target airflow to determine whether the duty ratio meets efficiency requirements
S300

No → Adjust the duty ratio of the blower, reacquire the air pressure at the intersection of the zoned air channels, and then execute step S200
S310

Yes

Adjust an opening position of a damper such that the airflow at an outlet end of each zoned air channel is equal to the target airflow
S320

FIG. 2

FIG. 3

FIG. 4

## INTERNATIONAL SEARCH REPORT

| International application No. |
|---|
| **PCT/CN2023/124296** |

### A. CLASSIFICATION OF SUBJECT MATTER

B60H1/00(2006.01)i

According to International Patent Classification (IPC) or to both national classification and IPC

### B. FIELDS SEARCHED

Minimum documentation searched (classification system followed by classification symbols)

IPC: B60H

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 蔚来汽车, 汽车, 车辆, 空调, 多区, 分区, 区域, 风口, 风门, 风量, 流量, 压力, 压降, 最大, 鼓风机, 能效, 效能, 能量, 占空比, 电压, automobile, vehicle, air conditioner, zone, subarea, duct, door, air, flow, pressure, maximum, blower, energy, efficiency, optimal, ratio, voltage

### C. DOCUMENTS CONSIDERED TO BE RELEVANT

| Category* | Citation of document, with indication, where appropriate, of the relevant passages | Relevant to claim No. |
|---|---|---|
| PX | CN 115891574 A (NIO TECHNOLOGY (ANHUI) CO., LTD.) 04 April 2023 (2023-04-04) claims 1-10 | 1-10 |
| X | CN 106347062 A (MAHLE INTERNATIONAL GMBH) 25 January 2017 (2017-01-25) description, paragraphs [0039]-[0122], and figures 1-12B | 1-10 |
| A | CN 114802798 A (JIANGSU BAIRUIAN NEW ENERGY TECHNOLOGY CO., LTD.) 29 July 2022 (2022-07-29) entire document | 1-10 |
| A | CN 104102809 A (VOLVO CAR CORP.) 15 October 2014 (2014-10-15) entire document | 1-10 |
| A | CN 114801647 A (SHANGHAI JIDU AUTOMOBILE CO., LTD.) 29 July 2022 (2022-07-29) entire document | 1-10 |
| A | JP 2000296710 A (MITSUBISHI HEAVY INDUSTRIES, LTD.) 24 October 2000 (2000-10-24) entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 November 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124296**

| Patent document cited in search report | | | Publication date (day/month/year) | Patent family member(s) | | | Publication date (day/month/year) |
|---|---|---|---|---|---|---|---|
| CN | 115891574 | A | 04 April 2023 | None | | | |
| CN | 106347062 | A | 25 January 2017 | EP | 3118034 | A1 | 18 January 2017 |
| | | | | KR | 20170009770 | A | 25 January 2017 |
| | | | | US | 2015336440 | A1 | 26 November 2015 |
| | | | | US | 9776471 | B2 | 03 October 2017 |
| | | | | CN | 106347062 | B | 08 January 2021 |
| CN | 114802798 | A | 29 July 2022 | None | | | |
| CN | 104102809 | A | 15 October 2014 | EP | 2793003 | A1 | 22 October 2014 |
| | | | | US | 2014305626 | A1 | 16 October 2014 |
| | | | | US | 9636970 | B2 | 02 May 2017 |
| | | | | CN | 104102809 | B | 27 April 2018 |
| CN | 114801647 | A | 29 July 2022 | None | | | |
| JP | 2000296710 | A | 24 October 2000 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211657673